# EUROPEAN PATENT APPLICATION

(11) **EP 3 845 445 A1**
(43) Date of publication of application: **07.07.2021**
(21) Application number: 20151389.2
(22) Date of filing: 13.01.2020
(51) Int. Cl.: B62M 3/08

(54) **PEDAL CAPABLE OF PROVIDING IMPROVED DRIVING FORCE**

(30) Priority: 03.01.2020 KR 20200000818
(71) Applicant: DNJA Co., Ltd., Yongin-Si, Gyeonggi-Do 17058 (KR)
(72) Inventor: KIM, Hark Moo, 17056 Yongin-si, Gyeonggi-do (KR)
(74) Representative: M. Zardi & Co S.A.

(57) **Abstract**

Disclosed herein is a pedal for rotating the wheels of a bicycle or cycle. The pedal for rotating the wheels of a bicycle or cycle includes: an upper part configured to be moved forward or rearward with the stepping of the pedal; and a lower carrier configured to support the linear movement of the upper part and to be fixed to its own location.

## Description

### BACKGROUND

### 1. Technical Field

The present invention relates generally to a pedal capable of providing improved driving force. More specifically, the present invention relates to a pedal that prevents the driving force, applied to the pedal by a pedaling human body structure, particularly the ankle, from being lost and significantly reduces pedaling fatigue.

### 2. Description of the Related Art

Pedals are indispensable to manual two-wheeled vehicles such as bicycles or cycles. When such a pedal is pressed (stepped on), the crank arm of a bicycle connected to the pedal is rotated and a rear wheel is rotated, thereby driving the bicycle.

The disadvantage of a conventional pedal structure is that when a user steps on a pedal forward, the center of gravity is directed to the front part of the sole, but the connection position of a crank arm and the pedal is fixed and the position of the pedal is fixed, so that the user easily suffers from pedaling fatigue. To ride a bicycle without foot fatigue, it is desirable that the center of the foot is placed at the center of the pedal, but in speed-critical recording races, it is inevitable that the center of gravity of the foot is directed forward.

In order to overcome this problem, the applicant proposed a technology in which a bicycle pedal had a center-of-gravity variation means for moving the center of gravity forward or backward on the upper part of the pedal connected to the drive shaft of the bicycle and allowed the center of gravity of the foot at the center of the pedal, thereby maximizing stepping force and thus minimizing pedaling fatigue in Korean Patent No. 10-1689245.

The present invention is further improved over the above preceding patent.

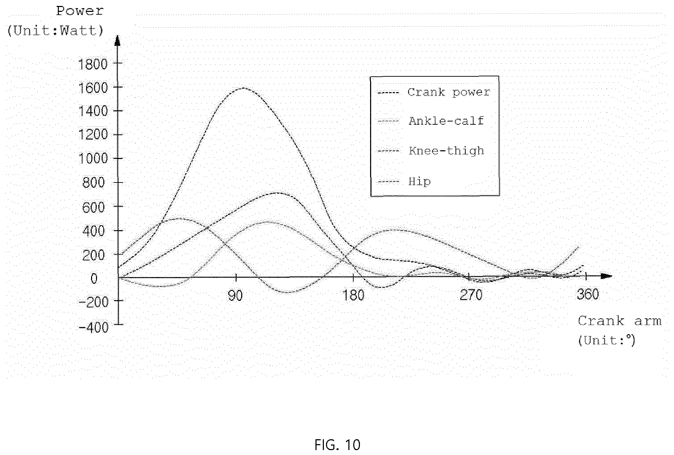

FIG. 10 is a graph showing the power applied to the pedal by the knee, hip and ankle of the human body according to the rotation angle of a crank arm when the pedal of the bicycle is stepped on. Crank power is the sum of the powers applied by the knee, the hip and the ankle. In the case of the ankle, a negative value was exhibited when the rotation angle of the crank arm was in the range of 0 to 45 degrees. It is thought that the reason for this is that the center of the foot is located on the front of the pedal while the pedal is rotated clockwise from the highest position (the 12 o'clock position) to the 3 o'clock position but the ankle of the human body prevents the pedal from being rotated forward by applying the force directed rearward.

If the loss of driving power at the ankle can be prevented, the loss driving power at the knee and the hip can be reduced and the driving force of pedaling can be increased as a whole, so that convenience can be increased in daily driving, exercise and leisure and a record shortening effect in bicycle or cycle races can be expected by the implementation of power pedaling.

### SUMMARY

The present invention has been conceived to overcome the above-described problems, and an object of the present invention is to provide a pedal capable of providing improved driving force, which is applicable to a manual two-wheeled vehicle and allows a user to step on it in the middle of the foot while supporting high-speed driving.

In order to accomplish the above object, the present invention provides a pedal for rotating the wheels of a bicycle or cycle, the pedal including: an upper part configured to be moved forward or rearward with the stepping of the pedal; and a lower carrier configured to support the linear movement of the upper part and to be fixed to its own location.

The upper part of the pedal may repeat a cycle in which the pedal is moved forward when the pedal is rotated from a 12 o'clock position to a 6 o'clock position in a clockwise direction and is moved rearward when the pedal is rotated from the 6 o'clock position to the 12 o'clock position in the clockwise direction.

The upper part of the pedal may include rails, blocks configured to accommodate the rails may be formed in the carrier, and the upper part of the pedal may be moved forward or rearward with the sliding of the rails.

The pedal may further include a power transmission mechanism including a first link, a second link connected to the first link, and third links connected to the second link, the central axis of at least one through hole formed in the third links may be on the same line as a rod connected to the crank arm of the bicycle or cycle, and the second link may revolve along a predetermined circular trajectory in the clockwise direction by the rotation of the third links with the stepping of the pedal.

One end of the first link may be fastened to the fastening member of the upper part of the pedal, the other end of the first link may be fastened to the second link, the first link may be moved forward or rearward in a horizontal direction by the revolution of the second link, and thus the upper part of the pedal may be moved forward or rearward in conjunction with the movement of the first link.

Threads may be formed on the lower portion of the first link including the other end of the first link, mating threads may be formed on the accommodation hole of the second link configured to accommodate the lower portion of the first link, the first link and the second link may be coupled to each other, and the first link may be linearly moved by the revolution of the second link.

The upper part of the pedal may include a top portion configured to have a corrugated stepping plate, a pair of long supports formed on the bottom of the top portion on both sides along an overall length of the pedal, and rails formed on the inner sides of the supports in a longitudinal direction.

The carrier may include side plates configured to extend long to a predetermined height along the length of the pedal and to function to accommodate internal components and connect with external components, and a plurality of blocks may be formed on the outer surfaces of the upper portions of the side plates at predetermined intervals in the longitudinal direction.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is an overall perspective view of a pedal 1 according to an embodiment of the present invention;
FIG. 2 is a rear view showing the pedal of FIG. 1 when viewed from the rear;
FIG. 3 is a bottom surface showing the pedal of FIG. 1 when viewed from below;
FIG. 4 is a side sectional view viewed from a section taken along line A-A of FIG. 1;
FIG. 5 is a conceptual diagram of a power transmission mechanism illustrating the principle of the present invention;
FIG. 6 is a side sectional view showing the pedal of the present invention when the pedal is at the 12 o'clock position;
FIG. 7 is a side sectional view showing the pedal of the present invention when the pedal is at the 3 o'clock position;
FIG. 8 is a side sectional view showing the pedal of the present invention when the pedal is at the 6 o'clock position;
FIG. 9 is a side sectional view showing the pedal of the present invention when the pedal is at the 9 o'clock position; and
FIG. 10 is a graph showing the power applied to the pedal by the knee, hip and ankle of the human body according to the rotation angle of a crank arm when the pedal of the bicycle is stepped on.

### DETAILED DESCRIPTION

A pedal according to the present invention is divided into an upper structure and a lower structure. The upper structure of the pedal horizontally slides in a forward or rearward direction according to the revolving location of the pedal. In order to move only the upper structure of the pedal, a power transmission mechanism using the principle of an internal combustion engine in which a piston moves linearly with the rotation of a crank is employed.

Some embodiments of the present invention will be described in detail below with reference to the exemplary accompanying drawings.

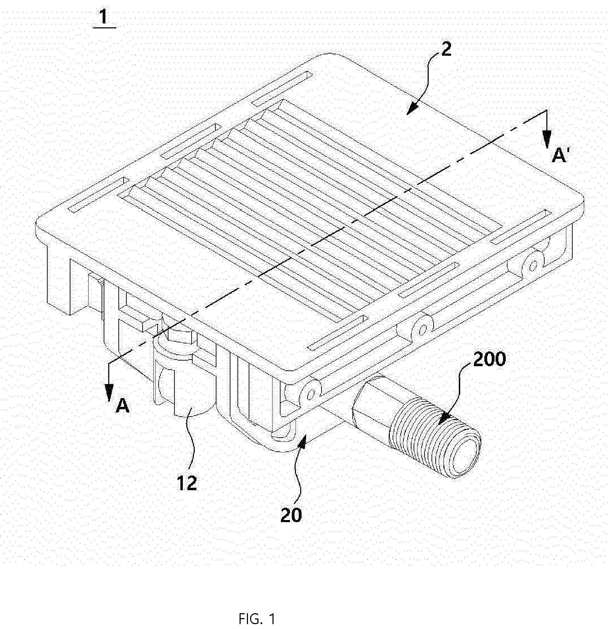

FIG. 1 is an overall perspective view of a pedal 1 according to an embodiment of the present invention. The pedal 1 is suitable for the use of a manual two-wheeled vehicle such as a bicycle or a cycle. A stepping plate configured to allow a foot to be placed thereon is disposed in the upper portion of the pedal 1, and a carrier 20 is disposed in the lower portion of the pedal 2. A rod 200 configured to be coupled to a crank arm extends from the right side of the carrier 20 to the outside.

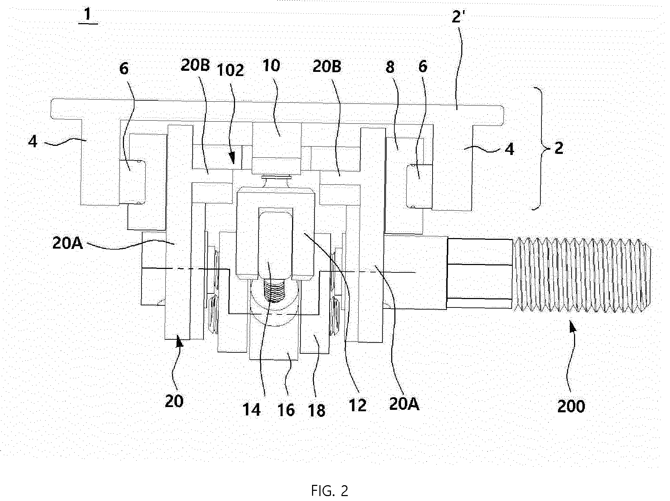

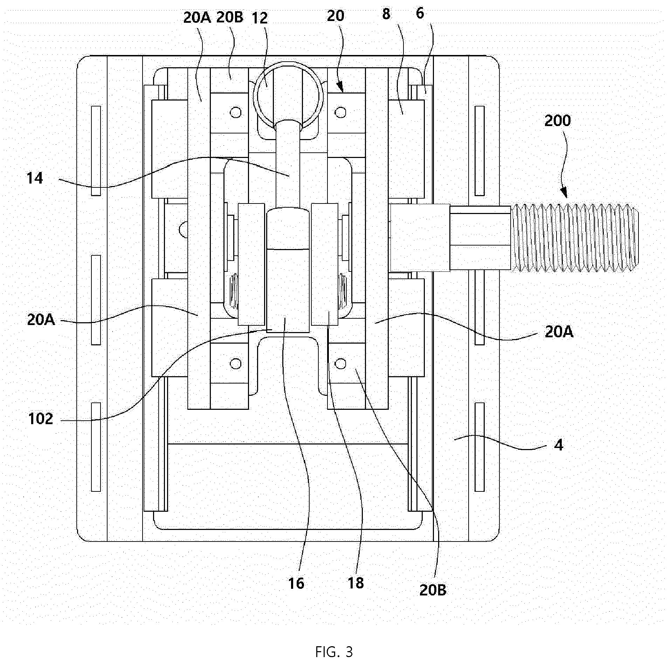

FIG. 2 is a rear view showing the pedal 1 of FIG. 1 when viewed forward from the rear, i.e., from the back of a bicycle, and FIG. 3 is a bottom view of the pedal 1 of FIG. 1.

Referring to the two drawings together, the upper part 2 of the pedal 1 includes a top portion 2' configured to have the corrugated stepping plate, and a pair of long supports 4 formed on the bottom of the top portion 2' on both sides along the overall length of the pedal 1. Rails 6 having a width narrower than that of the supports 4 are formed on the inner sides of the supports 4.

A cylindrical fastening column 10 protrudes downward from the center of the rear side of the bottom of the top portion 2' of the pedal 1, and a hinge support 12 is coupled and fastened into the hole of the fastening column 10. Accordingly, the hinge support 12 is structurally integrated with the upper part 2 of the pedal 1.

The carrier 20 may be fabricated in a rectangular "H" shape with a bridge being separated and the left and right parts thereof being the same, or may be fabricated in an integrated form. Side plates 20A extend long to a predetermined height along the length of the pedal 1 on the sides of the carrier 20, and function to accommodate internal components and connect with external components. Four rectangular support plates 20B are disposed on the upper portions of the opposite ends of the side plates 20A. A guide plate 102 is provided to fit the shapes of the top surfaces of the support plates 20B and the inner surfaces of the side plates 20A. As shown in FIG. 3, the guide plate 102 bridges the gap between the two support plates 20B on front and rear sides, and thus the carrier 20 is structurally and functionally constructed in an integrated form.

Two blocks, a total of four blocks 8, are firmly fastened to the outer surfaces of the upper portions of the side plates 20A at a predetermined interval along the longitudinal direction. Each of the blocks 8 receives a corresponding one of the rails 6 in its recessed groove, as shown in FIG. 2. The block 8 is not fastened to the rail 6 but the rail 6 is accommodated in the block 8 with a minute gap therebetween, so that the rail 6 is movable in the longitudinal direction using the block 8 as a support. As the rails 6 move, the upper part 2 of the pedal 1 moves. This function forms the basis of the operation principle of the pedal 1 according to the present invention. Even when the upper part 2 moves, the carrier 20 maintains a fixed location. In other words, the upper and lower structures of the pedal 1 are functionally separated from each other.

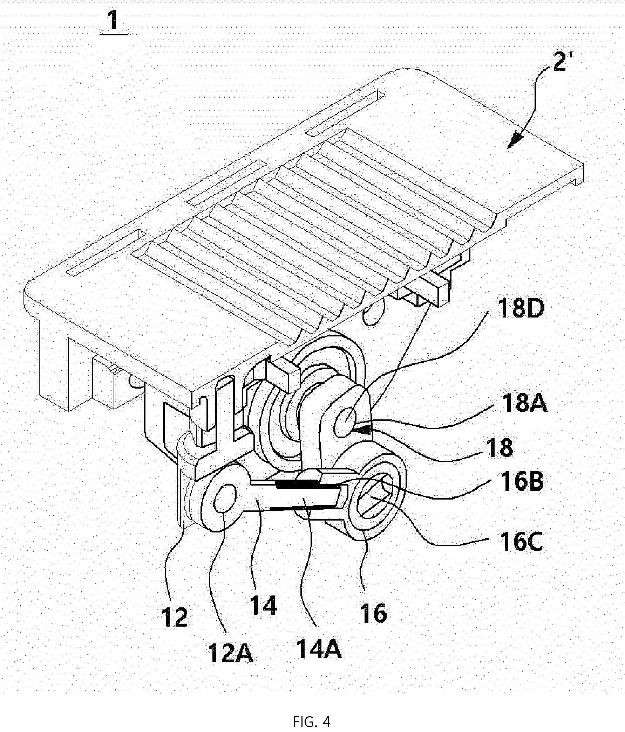

Next, the power transmission mechanism of the present invention will be described with reference to FIG. 4 that is viewed from the cross section taken along the line A-A of FIG. 1.

The power transmission mechanism basically includes a first link 14, a second link 16, and third links 18. The first link 14 and the second link 16 are disposed in the center of the width of the pedal 1, and the third links 18 are disposed on the left and right sides.

One end of the first link 14 is coupled to the pin 12A of the hinge support 12, and the other side 14A including the other end is accommodated in the connection hole 16B of the second link 16. Threads are formed on the portion of the outer surface of the first link 14 extending at least from the center to the other end, and threads having a mating shape are formed on the inner surface of the connection hole 16B. Accordingly, the two components may be engaged with each other.

An upper through hole 18A and a lower through hole (now shown in FIG. 4) configured to accommodate a pin 16C coupled to the boss portion of the second link 16 are formed in the third link 18. A pin 18D protruding from the boss portion of a corresponding one of the side plates 20A is rotatably coupled into the upper through hole 18A.

As can be seen in FIGS. 2 and 3, a line extending from the center of the upper through hole 18A coincides with the central axis of the rod 200 that is connected to the crank arm of the bicycle. In other words, the rod 200 is coupled into the upper through hole 18A of a right third link 18 (not shown in FIG. 4) in the state of being directed toward the bicycle. When a user steps on the pedal 1, the rod 200 revolves, for example, from the 12 o'clock position to the 3 o'clock position, 6 o'clock position, 9 o'clock position, and 12 o'clock position along with the pedal 1. The pin 18D is rotated as the rod 200 revolves. The pin 18D may include a single pin configured to pass through both the upper through holes 18A of the left and right third links 18, or may include two pins configured to pass through the upper through holes 18A, respectively. The first to third links are driven by the rotation of the pin 18D, so that the upper part 2 of the pedal 1 moves horizontally forward or backward.

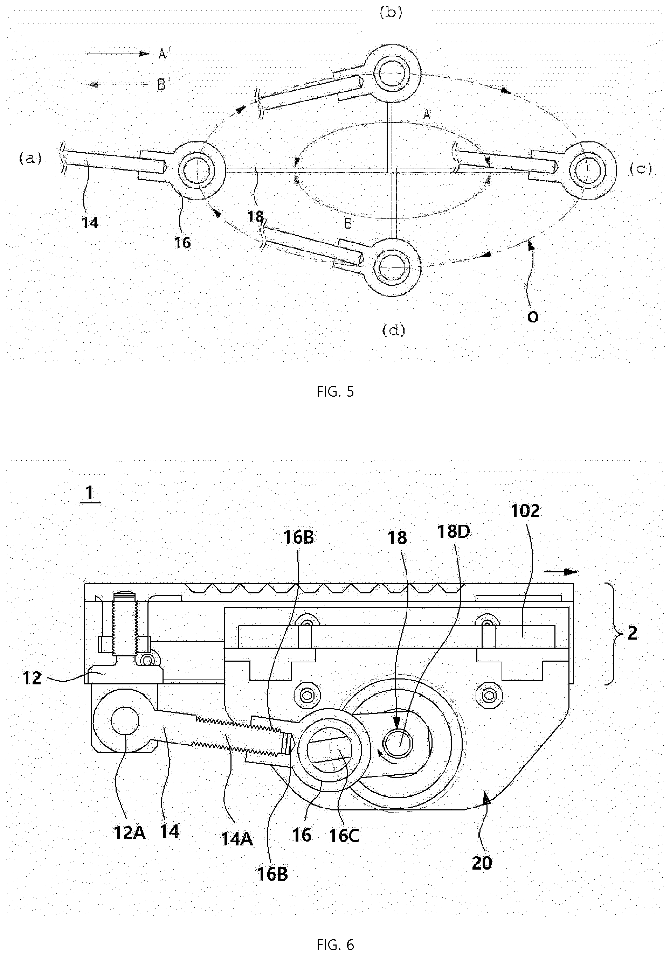

In this regard, the principle of the present invention will be described in greater detail with reference to FIG. 5. FIG. 5 conceptually shows individual components in order to help to understand the principle of the present invention. In FIG. 5, the left side is a rear side, and the right side is a front side, i.e., the direction in which the bicycle moves forward.

When a user places his or her foot on the top portion 2' of the pedal 1 and rotates the pedal 1 forward in order to move the bicycle forward, the pedal 1 and the rod 200 revolve clockwise. The pin 18D rotates clockwise. Accordingly, the second link 16 spaced apart and offset from the upper through hole 18A of the third link 18 revolves clockwise along a circular trajectory O. When the second link 16, more accurately the center of the pin 16C of the second link 16, revolves along a circular trajectory 0, the first link 14 moves in conjunction with the second link 16. When compared with the crank-cylinder mechanism of a vehicle well known to those skilled in the art, it can be seen that the third link 18 and the second link 16 connected thereto correspond to a connecting rod and the first link 14 corresponds to a cylinder. Since there is no restriction on the movement of the first link 14, the first link 14 horizontally moves in the left and right directions with the revolution of the second link 16. More specifically, when the second link 16 is in the orbit of the upper region A of the circular trajectory O, the first link 14 moves forward in the direction A'. In contrast, when the second link 16 is in the orbit of the lower region B of the circular trajectory O, the first link 14 moves in the direction B' and moves backward.

The first link 14 moves in the left and right directions. Since the rails 6 of the upper part 2 of the pedal 1 coupled with the hinge support 12 is movable in the left and right directions along the block 8, the upper part 2 of the pedal 1 moves forward or backward using the carrier 20 as a fixed support area. In other words, the first link 14 linearly moves together while simultaneously pushing or pulling the upper portion 2 of the pedal 1.

In FIG. 5, (a) shows the location of the second link 16 when the pedal 1 is at the 12 o'clock position, (b) shows the location of the second link 16 when the pedal 1 is at the 3 o'clock position, (c) shows the location of the second link 16 when the pedal 1 is at the 6 o'clock position, and (d) shows the location of the second link 16 when the pedal 1 is at the 9 o'clock position.

FIG. 6 is a side sectional view showing the pedal 1 of the present invention when the pedal 1 is at the 12 o'clock position. The first link 14 has moved backward to the last location, and the upper part 2 of the pedal 1 is also in the rearmost state.

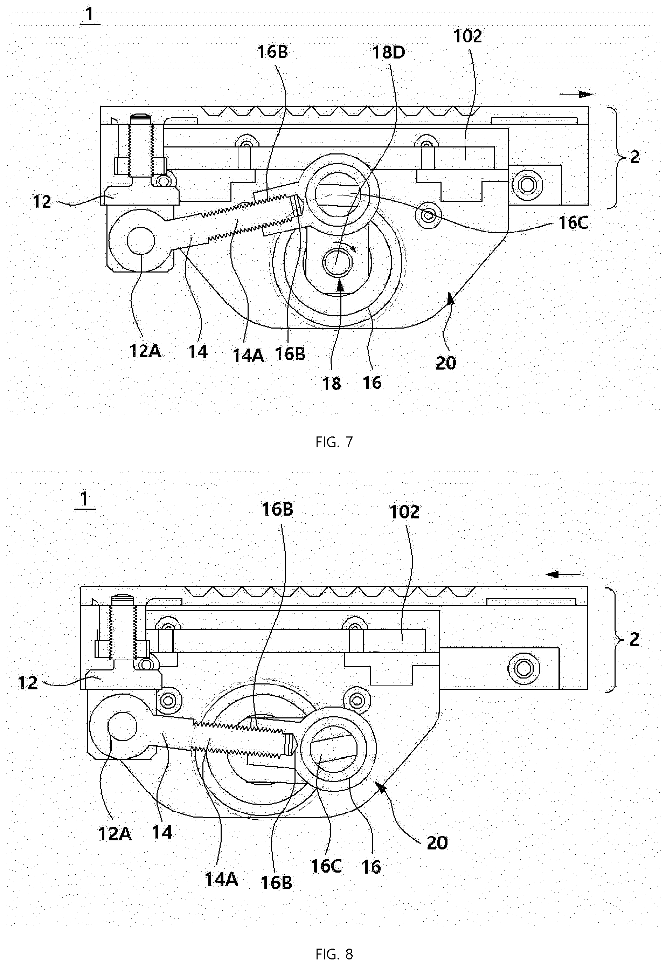

FIG. 7 is a side sectional view showing the pedal 1 of the present invention when the pedal 1 is at the 3 o'clock position. The first link 14 has slightly moved forward, and the upper part 2 of the pedal 1 is also in a slightly forward neutral state.

FIG. 8 is a side sectional view showing the pedal 1 of the present invention when the pedal 1 is at the 6 o'clock position. The upper part 2 of the pedal 1 is in the most forward state.

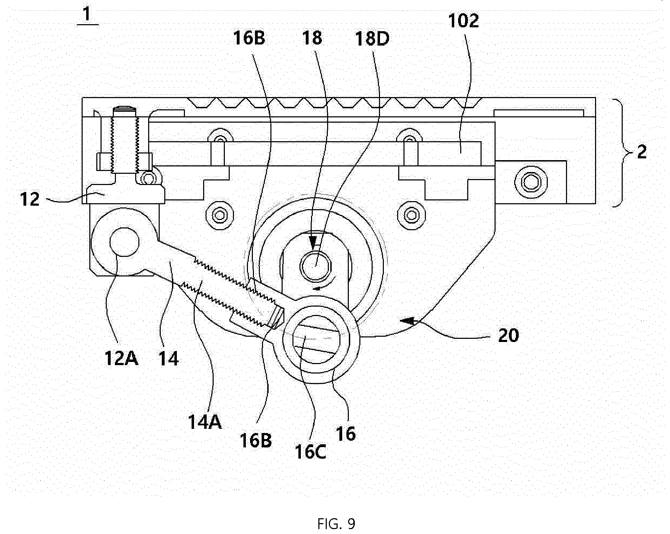

FIG. 9 is a side sectional view showing the pedal 1 of the present invention when the pedal 1 is at the 9 o'clock position. The upper part 2 of the pedal 1 is in a slightly backward neutral state. It will be understood that the position at this time is substantially the same as the 3 o'clock position in FIG. 7.

When the pedal 1 is further depressed, the state of FIG. 6 is entered. When the bicycle continues to run, the cycle of FIGS. 6 to 9 is repeated. The upper part 2 of the pedal 1 performs a reciprocating sliding movement back and forth at predetermined intervals with respect to the fixed carrier 20, like a flat escalator capable of forward and reverse rotation.

Since the upper part 2 of the pedal 1 moves forward in the section between the 12 o'clock position and the 6 o'clock position requiring the highest driving force when a user uses a bicycle or a cycle, the center of gravity of the foot is placed at the center of the pedal while pressing the pedal 1, thereby maximizing stepping force and also reducing pedaling fatigue.

Furthermore, since the upper part 2 of the pedal 1 slightly moves forward horizontally in the section between the 12 o'clock position and the 3 o'clock position, the force of an ankle of a human body can be directed forward without losing the force applied to the pedal 1. Furthermore, it is possible to solve the disadvantages of preventing the forward rotation of the pedal 1 and increasing the fatigue on the ankle.

The present invention can be widely used not only for leisure but also for sports events of bicycles and cycles that require the shortening of records.

The present invention can increase pressing force in the middle of the foot when the pedal is in the highest position, and can reduce the fatigue of the leg by reducing the bending angle of the knee.

The present invention provides the effect of increasing the driving force of the pedal by directing the force, applied to the pedal by the ankle of the human body, forward without loss.

It will be apparent that the scope of the present invention extends to ranges equal or equivalent to the appended claims.

## Claims

1. A pedal for rotating wheels of a bicycle or cycle, the pedal comprising:
an upper part configured to be moved forward or rearward with stepping of the pedal; and
a lower carrier configured to support linear movement of the upper part and to be fixed to its own location.

2. The pedal of claim 1, wherein the upper part of the pedal repeats a cycle in which the pedal is moved forward when the pedal is rotated from a 12 o'clock position to a 6 o'clock position in a clockwise direction and is moved rearward when the pedal is rotated from the 6 o'clock position to the 12 o'clock position in the clockwise direction.

3. The pedal of claim 1, wherein the upper part of the pedal includes rails, blocks configured to accommodate the rails are formed in the carrier, and the upper part of the pedal is moved forward or rearward with sliding of the rails.

4. The pedal of claim 2, further comprising a power transmission mechanism including a first link, a second link connected to the first link, and third links connected to the second link, wherein a central axis of at least one through hole formed in the third links is on a same line as a rod connected to a crank arm of the bicycle or cycle, and wherein the second link revolves along a predetermined circular trajectory in the clockwise direction by rotation of the third links with stepping of the pedal.

5. The pedal of claim 4, wherein one end of the first link is fastened to a fastening member of the upper part of the pedal, a remaining end of the first link is fastened to the second link, the first link is moved forward or rearward in a horizontal direction by revolution of the second link, and thus the upper part of the pedal is moved forward or rearward in conjunction with the movement of the first link.

6. The pedal of claim 5, wherein threads are formed on a lower portion of the first link including the remaining end of the first link, mating threads are formed on an accommodation hole of the second link configured to accommodate the lower portion of the first link, the first link and the second link are coupled to each other, and the first link is linearly moved by the revolution of the second link.

7. The pedal of claim 5, wherein the upper part of the pedal includes a top portion configured to have a corrugated stepping plate, a pair of long supports formed on a bottom of the top portion on both sides along an overall length of the pedal, and rails formed on inner sides of the supports in a longitudinal direction.

8. The pedal of claim 7, wherein the carrier includes side plates configured to extend long to a predetermined height along the length of the pedal and to function to accommodate internal components and connect with external components, and a plurality of blocks is formed on outer surfaces of upper portions of the side plates at predetermined intervals in the longitudinal direction.
